# EUROPÄISCHE PATENTSCHRIFT

(11) **EP 0 652 479 B1**
(45) Veröffentlichungstag und Bekanntmachung des Hinweises auf die Patenterteilung: **24.11.1999**
(21) Anmeldenummer: 94810625.7
(22) Anmeldetag: 31.10.1994
(51) Int. Cl.: G03D 13/00, G03B 27/32

(54) **Integrierte fotografische Verarbeitungsanlage und Verfahren zum Betrieb der Anlage**
Integrated photographic processing plan and method of operating the same
Système de traitement photographique intégré et méthode pour son fonctionnement

(30) Priorität: 08.11.1993 CH 334493
(43) Veröffentlichungstag der Anmeldung: 10.05.1995
(73) Patentinhaber: GRETAG IMAGING AG, CH-8105 Regensdorf (CH)
(72) Erfinder: Knecht, Hugo, CH-8165 Schöfflisdorf (CH); Pessot, Ennio, I-33170 Pordenone (IT)
(74) Vertreter: Schwabe - Sandmair - Marx

(56) Entgegenhaltungen:
- EP-A- 0 157 214
- EP-A- 0 246 408
- EP-A- 0 437 814
- DE-A- 4 126 578

## Beschreibung

Die Erfindung betrifft eine integrierte fotografische Verarbeitungsanlage gemäss Oberbegriff des Patentanspruchs 1 sowie ein Verfahren zum Betrieb der Anlage gemäss Oberbegriff des Patentanspruchs 11.

Integrierte fotografische Verarbeitungsanlagen, sogenannte Micro Labs, vereinen die Funktionen Film- Entwicklung, Kopieren der Negative auf Fotopapier und Papier-Entwicklung in einem kompakten Gerät. Derartige Kompaktgeräte werden üblicherweise dezentral direkt an den Fotoverkaufsstandorten eingesetzt, wo das Fotoauftrags-Aufkommen im allgemeinen nicht besonders hoch ist. Dies können beispielsweise Supermärkte sein, die das Fotogeschäft als Nebengeschäft betreiben, oder auch Foto- und Elektronik Geschäfte, welche in erster Linie auf das "Hardware"-Geschäft (Filme, Fotoapparate) ausgerichtet sind und nur einen relativ geringen Anteil der Kundenaufträge selbst bearbeiten. Da diese Geräte vielfach von nur wenig geübtem Bedienungspersonal betrieben werden, ist eine möglichst vollautomatische Verarbeitungsweise der Fotoaufträge in nur einem Abeitsgang erwünscht. Bei den bekannten Geräten dieser Art wird der noch nicht entwickelte belichtete Film des Kunden in der Original Filmpatrone in das Gerät eingegeben, und als Ausgangsprodukt erhält die Bedienungsperson den entwickelten Film und die fertig kopierten und entwickelten Bilder. Alle dazu erforderlichen Verarbeitungsschritte, vom Herausziehen des Films aus der Filmpatrone, über das Entwickeln des Filmes bis zur Belichtung der Negative auf Fotopapier und die Entwicklung des belichteten Fotopapiers, erfolgen vollautomatisch innerhalb des Gerätes.

Ein derartiges einstufiges integrierte Fotoverarbeitungsgerät ist beispielsweise in der US-A-4,864,354 beschrieben. Bei diesem Einzelfilm-Verarbeitungsgerät ist der Ausgang des Filmprozessors eng mit der Filmbühne des fotografischen Kopiergerätes, des sogenannten Printers, verbunden. Insbesondere sind die Kopierlichtquelle und die fotografische Filtereinrichtung zur Erstellung von Farbkopien unmittelbar nach dem Ausgang des Filmprozessors angeordnet. Das von der Kopierlichtquelle kommende und von dem Negativ transmittierte Licht wird mit Hilfe zweier Spiegel umgelenkt und auf das noch unbelichtete Fotopapier gerichtet. Dieses ist eingangs des Papierprozessors vorgesehen, der parallel zur Längserstreckung des Filmprozessors angeordnet ist. Diese Anordnung mit Umlenkspiegeln ist sehr empfindlich gegenüber Verschmutzung und Erschütterungen, was sich negativ auf die Abbildungsschärfe auswirken kann.

Aufgrund der geforderten Kompaktkeit integrierter Fotoverarbeitungsgeräte sind die einzelnen Baugruppen sehr schwer zugänglich. Dies trifft umso mehr bei diesem bekannten Gerät zu. Durch die enge Kopplung der Filmbühne des Printers mit dem Ausgang des Filmprozessors sind insbesondere die optischen Baugruppen sehr schwer zu erreichen. Gerade die Spiegel, mit denen das Kopierlicht auf das Fotopapier gerichtet wird, müssen aber periodisch gereinigt werden. Ausserdem kann es erforderlich sein, diese von Zeit zu Zeit neu zu justieren. Die enge Kopplung der Filmbühne des Printers an den Ausgang des Filmprozessors bedingt auch, dass die Transportsysteme des Printers und des Filmprozessors sehr eng miteinander gekoppelt sind. Zwar ist eingangs des Printers ein Schlaufenbuffer vorgesehen, der dazu dient, Schwankungen in der Verarbeitungsgeschwindigkeit des Printers, beispielsweise wegen längerer Belichtungszeiten bei optisch dichteren Negativen, auszugleichen. Doch stellt dieser Schlaufenbuffer keine richtige Entkopplung der beiden Transportsysteme dar. Der Film ist während seiner Bearbeitung immer entweder vom Transportsystem des Filmprozessors oder des Printers und über eine gewisse Zeit von beiden Transportsystemen geführt. Falls ein Kunde wünscht, dass sein Film nur entwickelt wird, besteht bei diesem bekannten Gerät deshalb keine Möglichkeit, den entwickelten Film ausgangs des Filmprozessors einfach aus dem Gerät auszuscheiden, sondern der Film muss durch den Printerteil transportiert werden. Dabei muss das Bedienungspersonal acht geben, dass es den Printer rechtzeitig derart steuert, dass keine Kopien erstellt werden sollen. Erfolgt diese Steuerung zwar korrekt und rechtzeitig, so wird dennoch die Kapazität des Printers durch das Hindurchtransportieren des Filmes im "Leerlauf des Printers" unnötig belegt.

Besonders nachteilig an dieser engen Kopplung der Filmbühne des fotografischen Printers mit dem Ausgang des Filmprozessors ist, dass sie eine zweistufige Arbeitsweise, das heisst die Bearbeitung von Nachbestellungen, Vergrösserungsaufträgen oder von Korrekturen des Erstdurchgangs, wesentlich erschweren. Zwar besteht auch bei diesen bekannten Geräten die Möglichkeit Nachbestellungen oder Vergrösserungen zu bearbeiten, jedoch bedingt dies komplizierte Filmeingabevorrichtungen und relativ aufwendige Konstruktionen der Projektionsoptik, um die unterschiedlichen Vergrösserungsmassstäbe einstellen zu können. Deshalb sind die bekannten Geräte üblicherweise auch nur für die Verarbeitung eines einzigen Papierformats konfiguriert. Ein Filmstreifen des Nachbestellauftrags wird über die Filmausgabeöffnung am Printerteil in das Gerät eingeladen. Dazu muss das Filmtransportsystem des Gerätes in umgekehrte Richtung betrieben werden, bis der Filmstreifen zu einem eingangs des Printers vorgesehenen Schlaufenbuffer gelangt. Dann wird der Transportmechanismus wieder in der üblichen Transportrichtung betrieben. Während der Erstellung der Kopien kann das Bedienungspersonal die korrekte Lage der Negative nicht überprüfen und hat keine Möglichkeit, diese zu korrigieren. Da sich bei der Abarbeitung eines Nachbestellauftrags die Weiterbearbeitung des ausgangs des Filmprozessors ausgestossenen entwickelten Filmes eines Erstdurchlaufs unweigerlich verzögern würde, muss vor der Eingabe bereits entwickelter Filmstreifen eines Nachbestellauftrages abgewartet werden, bis der Filmprozessor leer ist. Andernfalls würde der Film des Erstdurchgangs zu lange im Filmprozessor verbleiben, und er würde zerstört werden.

Ein weiterer Nachteil bei den bekannten Geräten besteht auch darin, dass sie nur für die Erstellung eines einzigen Bildes je Negativ konzipiert sind. Wünscht ein Kunde mehrere Abzüge von einem Negativ, so muss bei den bekannten Geräten der Filmstreifen mit dem betreffenden Negativ entsprechend oft in das Gerät eingegeben werden. Dieser Umstand ist sehr unbefriedigend, da er die Kapazität der Geräte deutlich einschränkt.

All diese Nachteile der Geräte des Standes der Technik erfordern grosse Aufmerksamkeit seitens des Bedienungspersonals, sodass der eigentliche Sinn derartiger integrierter fotografischer Verarbeitungsgeräte, nämlich die Möglichkeit, sie auch mit weniger geübtem Bedienungspersonal betreiben zu können, wieder verloren geht. Zudem kann es durch die sehr enge räumliche Kopplung des Filmprozessors an die Filmbühne des fotografischen Printers zu Korrosionen im empfindlichen Printerteil kommen, die durch die Chemikalien des Filmprozessors bedingt sind.

Aus DE 41 26 578 Al ist eine Vorrichtung zum Kopieren von fotografischen Aufnahmen auf lichtempfindlichem Papier in Form von Einzelblättern bekannt. Diese Vorrichtung umfaßt eine Kopierlichtquelle, eine Vorlagenbühne, eine optische Abbildungseinrichtung und eine Papierbühne. Da ein Filmentwicklungsteil und eine Kopierstation mit unterschiedlichen Geschwindigkeiten arbeiten, ist ein Zwischenspeicher 19 vorgesehen. Ein dem Zwischenspeicher zugeordnetes Transportsystem, das von dem Filmentwicklungsteil und der Kopierstation unabhängig ist, ist aus dieser Druckschrift nicht bekannt.

Aufgabe der vorliegenden Erfindung ist es daher, eine integrierte fotografische Verarbeitungsanlage zu schaffen, in dem Erstdurchgänge einstufig abgearbeitet werden können, in der aber auch eine zweistufige Arbeitsweise, wie sie für die Bearbeitung von Nachbestellaufträgen, für Vergrösserungen oder für Korrekturen des Erstdurchgangs erforderlich ist, sehr einfach möglich ist. Die Eingabe von Filmstreifen aus Nachbestellaufträgen soll unabhängig vom Bearbeitungsgrad eines zu entwickelnden Filmes im Filmprozessor praktisch jederzeit erfolgen können. Das Printermodul soll für das Bedienungspersonal leicht zugänglich sein und soll es erlauben, die korrekte Lage der Negative von Nachbestellaufträgen, aber auch von Erstdurchgängen zu kontrollieren und gegebenenfalls zu korrigieren. Ausserdem soll die Projektionsoptik leicht zugänglich sein, um unterschiedliche Vergrösserungsmassstäbe einfach einstellen zu können. Dabei soll es vor allem auch möglich sein, unterschiedliche Fotopapierformate zu belichten. Die Gefahr von Korrosionen von Elementen des fotografischen Printers durch Chemikalien aus dem Filmprozessor soll vermieden werden. Die einzelnen Module des integrierern Fotoverarbeitungsgerätes sollen für Wartungs- und Reinigungsarbeiten leicht zugänglich sein. Die Bearbeitung von Kundenaufträgen, bei denen nur eine Filmentwicklung ohne die Erstellung von Abzügen gewünscht wird, soll ohne Beeinträchtigung der Durchlaufkapazität des Printers möglich sein. Insgesamt besteht der Wunsch nach einer integrierten fotografischen Verarbeitungsanlage, die modular aufgebaut ist, leicht zu bedienen ist und mit der ohne Einschränkungen im Einschritt- wie auch im Zweischrittbetrieb gearbeitet werden kann. Die Anlage soll auch von weniger geübtem Personal zuverlässig bedient werden können.

Die Lösung all dieser und noch weiterer damit zusammenhängender Aufgaben erfolgt durch eine integrierte fotografische Verarbeitungsanlage mit den im Kennzeichen des Patentanspruchs 1 angeführten Merkmalen. Ein Verfahren zum Betrieb der erfindungsgemässen integrierten fotografischen Verarbeitungsanlage weist insbesondere die im Kennzeichen des Patentanspruchs 11 aufgelisteten Verfahrensschritte auf. Besonders bevorzugte Ausführungsvarianten der Vorrichtung bzw. besonders bevorzugte Verfahrensvarianten sind jeweils Gegenstand der zugehörigen abhängigen Ansprüche.

Die erfindungsgemässe integrierte fotografische Verarbeitungsanlage umfasst eine Reihe von Bearbeitungsstationen, die innerhalb eines gemeinsamen Gehäuses angeordnet sind. Dazu gehören eine Eingabestation für noch nicht entwickelten belichteten Rollenfilm, beispielsweise in Filmpatronen aufgewickelten Kleinbildfilm, in der die eingegebenen Rollenfilme abgespult und in ein Filmtransportsystem eines daran anschliessenden Filmprozessors eingespeist werden. In dem Filmprozessor werden die fotografischen Filme entwickelt. Ausgangsseitig des Filmprozessors ist ein fotografisches Kopiergerät zum bildweisen Aufbelichten von auf dem entwickelten Film enthaltenen Negativen auf fotografisches Papier, angeordnet. Das fotografische Kopiergerät ist mit einem eigenen Transportsystem für den entwickelten Film ausgestattet. Schliesslich sind noch ein Papierprozessor zum Entwickeln des belichteten fotografischen Papiers und eine Ausgabestation für den entwickelten Film und die entwickelten Papierbilder vorgesehen. Zwischen dem Ausgang des Filmprozessors und dem fotografischen Kopiergerät ist ein Zwischenspeicher für entwickelte Einzelfilme angeordnet, der mit einer automatischen Transporteinrichtung zur Übergabe der entwickelten Einzelfilme an eine Filmbühne des fotografischen Kopiergeräts ausgestattet ist, welche unabhängig von den Transportsystemen des Filmprozessors und des fotografischen Kopiergeräts betreibbar ist.

Durch diese konstruktive Massnahme werden die Transportsysteme des Filmprozessors und des fotografischen Kopiergeräts vollständig entkoppelt. Trotzdem bleiben die kompakten Abmessungen der integrierten Verarbeitungsanlage erhalten. Die Filmbühne des fotografischen Kopiergeräts ist räumlich vom Ausgang des Filmprozessors getrennt. Dadurch kann einerseits auf aufwendige und verschmutzungs- und erschütterungsanfällige Spiegelkonstruktionen verzichtet werden und die Projektionsoptik an leicht zugängiger Stelle eingebaut sein, sodass es sehr einfach möglich ist, andere Vergrösserungsmassstäbe einzustellen bzw. Filmstreifen von Nachbestellaufträgen in die Filmbühne einzubringen. Auf aufwendige Transportmechanismen und -steuerungen zur Umkehrung der Transportrichtung kann gleichfalls verzichtet werden. Die Zwischenschaltung eines Speichers für die entwickelten Filme, der mit einem eigenen völlig autarken automatischen Transportsystem ausgestattet ist, erlaubt auf einfache Weise sowohl einen einstufigen Betrieb, alsauch einen zweistufigen Betrieb im Falle von Vergrösserungen und/oder Nachbestellungen. Es muss nicht mehr darauf gewartet werden, bis ein Film den Filmprozessor durchlaufen hat, sondern die Filmstreifen des Nachbestellauftrages können jederzeit in die Filmbühne eingegeben werden. Fals ein Kunde es wünscht, dass ein Film nur entwickelt wird, oder falls bei einem Auftrag aus anderen Gründen keine Kopien erstellt werden sollen, kann der entwickelte Film ohne weiteres aus dem Zwischenspeicher entnommen werden. Fehlbedienungen des Bedienungspersonals, die in einer überflüssigen Bearbeitung des Filmes im fotografischen Kopiergerät resultieren können, werden auf diese Weise vermieden, und die Kapazität des fotografischen Kopiergeräts wird in diesem Fall nicht mehr unnötig belastet, und kann beispielsweise für die Abarbeitung von Nachbestellaufträgen genutzt werden.

In einer bevorzugten Ausführungsvariante umfasst der Zwischenspeicher eine Ablage für eine mit der vorlaufenden Vorderkante des Filmes verbundene Transportkarte und einen vertikalen Schacht zur Aufnahme der entwickelten Einzelfilme auf. Bei dieser Ausführungsvariante wird die Vorderkante eines jeden Films, beispielsweise in der Eingabestation vor dem Durchlaufen des Filmprozessors, automatisch oder manuell mit einer Transportkarte verbunden. Der Transport des Films erfolgt dann nicht durch Eingriff von Walzen im Bereich der Filmperforationen, sondern es wird die Transportkarte, die gleichfalls mit Perforationen ausgestattet sein kann, transportiert. Dies hat den grossen Vorteil, dass Filme mit einer Beschädigung im Bereich der Perforationen trotzdem problemlos transportiert werden können. Im Filmprozessor können sich Transportprobleme beispielsweise aufgrund schadhafter Filmperforationen jedoch fatal auswirken. Im schlimmsten Fall kann der Film zerstört werden.

Ausgangs des Filmprozessors wird die Transportkarte in die Ablage abgelegt während die daran befestigte Filmlänge in einen vertikalen Schacht fällt. Von der Transporteinrichtung werden die Transportkarten derart in Richtung auf das fotografische Kopiergerät vorgeschoben, dass immer jeweils eine nachfolgende darübergeschlichtete Transportkarte dachziegelartig in Richtung des Filmprozessor-Ausgangs verschoben erscheint, während die mit den Transportkarten verbundenen Einzelfilme beim Vorschub der Transportkarten schrittweise aus dem Schacht heraufgezogen werden. Diese Variante des Zwischenspeichers ist höchst einfach zu realisieren und erfordert sehr wenig zusätzlichen Platz.

Die Transportkarten sind an ihren Längsrändern vorzugsweise mit einander gegenüberliegenden Perforationen versehen, in welche die Transporteinrichtungen des Filmprozessors und des Zwischenspeichers eingreifen können. Im Zwischenspeicher werden die Transportkarten von speziell ausgebildeten Vorschubmitteln schrittweise vorgeschoben. Der Vorschub der Transportkarten erfolgt dabei immer um eine Strecke, die dem Abstand zwischen zwei aufeinanderfolgenden Perforationen entspricht. Die dachziegelartig verschoben übereinanderliegenden Transportkarten werden dabei derart abgelegt, dass die Perforationen der einzelnen Karten jeweils übereinanderliegen. Auf diese Weise können die dachziegelartig übereinander geschichteten Transportkarten gemeinsam vorgeschoben werden, bis die unterste von einem Transportwalzenpaar ausgangs des Zwischenspeichers erfasst wird und in Richtung Kopiergerät vorgeschoben wird. Der Vorteil der Transportkarte liegt darin, dass auch der Transport des Filmes im Zwischenspeicher nicht durch Eingriff von Vorschubmitteln in die Perforationen des Filmes selbst erfolgt, sondern dass die Vorschubmittel in die Perforationen an den Längskanten der Transportkarten eingreifen. Auf diese Weise können auch Filme mit schadhaften Perforationen problemlos transportiert werden. Wenn die unterste Transportkarte von dem Transportwalzenpaar ausgangs des Zwischenspeichers erfasst wird, sind die übrigen Transportkarten noch von den Vorschubmitteln erfasst und werden von diesen zurückgehalten, während der mit der untersten Transportkarte verbundene Film herausgezogen wird.

In einer bevorzugten Ausführungsvariante weisen die Vorschubmittel der Transporteinrichtung im Zwischenspeicher Eingriffinger auf, die an einer unterhalb der Ablage angeordneten rotierbaren Welle derart exzentrisch befestigt sind, dass sie bei jeder Umdrehung der Welle mit den Öffnungen an den Längskanten der Transportkarten in Eingriff bringbar sind und die Transportkarten um den Abstand zwischen zwei Öffnungen in Richtung des fotografischen Kopiergerätes vorschieben.

Die Breite der fachartig ausgebildeten Ablage ist nur geringfügig grösser als die Breite der Transportkarte. Ihre Länge ist derart gewählt, dass eine Reihe von Karten, beispielsweise bis zu fünf Karten dachziegelartig verschoben übereinander abgelegt werden können. Vorzugsweise beträgt die Länge der Ablage dabei aber nicht mehr als die doppelte Länge der Transportkarte. Auf diese Weise wird der Platzbedarf gering gehalten und es kann eine relativ grosse Anzahl von Transportkarten mit daran hängenden entwickelten Einzelfilmen bzw. Filmstreifen dachziegelartig übereinander geschlichtet werden. Dies ist beispielsweise dann von Vorteil, wenn aus irgendwelche Gründen der Betrieb des fotografischen Kopiergerätes unterbrochen werden muss. In diesem Fall muss die weitere Eingabe von unentwickelten Rollenfilmen bzw. die Eingabe von Filmstreifen, die zuvor mit einer Transportkarte verbunden werden, nicht unterbrochen werden, sondern der Zwischenspeicher stellt einen zusätzlichen Buffer dar, in den die entwickelten Filme oder Filmstreifen in der Zwischenzeit abgelegt werden können. Die im Zwischenspeicher abgelegten entwickelten Filme sind dabei immer bereits aus dem Transportsystem des Filmprozessors ausgeschieden aber noch nicht in das Transportsystem des fotografischen Kopiergeräts eingefädelt. Bei Wiederinbetriebnahme des fotografischen Kopiergerätes wird dieses aus dem Zwischenspeicher bedient. Dabei kann es mit der höchsten möglichen Arbeitsgeschwindigkeit betrieben werden um den Rückstau abzuarbeiten. Dies ist nicht zuletzt deshalb besonders einfach möglich, da die Transportmittel des Filmprozessors, die Transporteinrichtung des Zwischenspeichers und die Filmtransportmittel des fotografischen Kopiergerätes völlig unabhängig voneinander betreibbar und geschwindigkeitsregulierbar sind.

Ausgangs des Zwischenspeichers, aber noch vor der Filmbühne des fotografischen Kopiergeräts ist eine Schneideeinrichtung zum Abtrennen der Transportkarte von der vorlaufenden Vorderkante des entwickelten Filmes und eine Ausscheideeinrichtung für die abgetrennten Transportkarten vorgesehen, die mit einem Auffangbehältnis für die Transportkarten verbunden ist. Von dort können die Transportkarten wieder an die Eingangstation des Gerätes zurücktransportiert werden, wo sie wiederverwendet werden können. Dies kann vollautomatisch oder manuell durch das Bedienungspersonal erfolgen.

In einer bevorzugten Ausführungsvariante ist der Zwischenspeicher samt seinen zugehörigen Transportmitteln als wahlweise in den Filmpfad einbringbares und wieder entnehmbares Modul ausgebildet. Auf diese Weise kann der Anwender selbst entscheiden, ob er die Vorteile des Zwischenspeichers in Anspruch nehmen möchte, oder ob er das Gerät lieber in einem Zweistufen-Prozess betreiben will. Im zweiten Fall wird der entwickelte Film ausgangs des Filmprozessors vom Bedienungspersonal entnommen und manuell in die Filmbühne beispielsweise eines separaten Kopiergerätes für Spezialvergrösserungen eingegeben.

Vorzugsweise werden Transportkarten benutzt, die zugleich als Informationsträger dienen. Die Informationen sind auf den Transportkarten als Lochungen codiert. Die Ablage ist mit einem Lochkarten-Lesegerät ausgestattet, welches die auf den Transportkarten codierte Information entschlüsselt. Auf diese Weise kann dem Gerät beispielsweise mitgeteilt werden, dass ein bestimmter Film nur entwickelt werden soll. Wenn die Transportkarte dieses Films in die Ablage abgelegt wird, erkennt der Lochkarten-Leser die entsprechende Information und leitet diese an die Steuerungseinheit weiter. Die Vorschubmittel in der Ablage werden nicht in Betrieb gesetzt und es wird ein Signal für das Bedienungspersonal erzeugt, dass ein Film in den Zwischenspeicher abgelegt worden ist, der entnommen werden kann. Andere Transportkarten können die Information enthalten, dass von jeder Vorlage zwei Kopien erstellt werden sollen. In diesem Fall wird das Kopiergerät entsprechend gesteuert. Als zusätzliche Hilfe für das Bedienungspersonal weisen die Transportkarten mit den üblichen Standardinformationen jeweils eine unterschiedliche Farbe auf. Das Bedienungspersonal muss sich in diesem Fall nicht die codierte Information auf der Transportkarte entschlüsseln, sondern es kann die Karten anhand der Farbe auswählen und zusammen mit dem in der Filmdose enthaltenen Rollenfilm in die Eingabestation einbringen.

Im folgenden wird die Erfindung mit allen ihr als wesentlich zugehörigen Details anhand eines in den Figuren schematisch dargestellten Ausführungsbeispiels näher erläutert. Es zeigen:
- Fig. 1: eine erfindungsgemässe Verarbeitungsanlage,
- Fig. 2: ein Schema der Verarbeitungsanlage, und
- Fig. 3-5: den Weitertransport von in einem Zwischenspeicher abgelegten entwickelten Filmen.

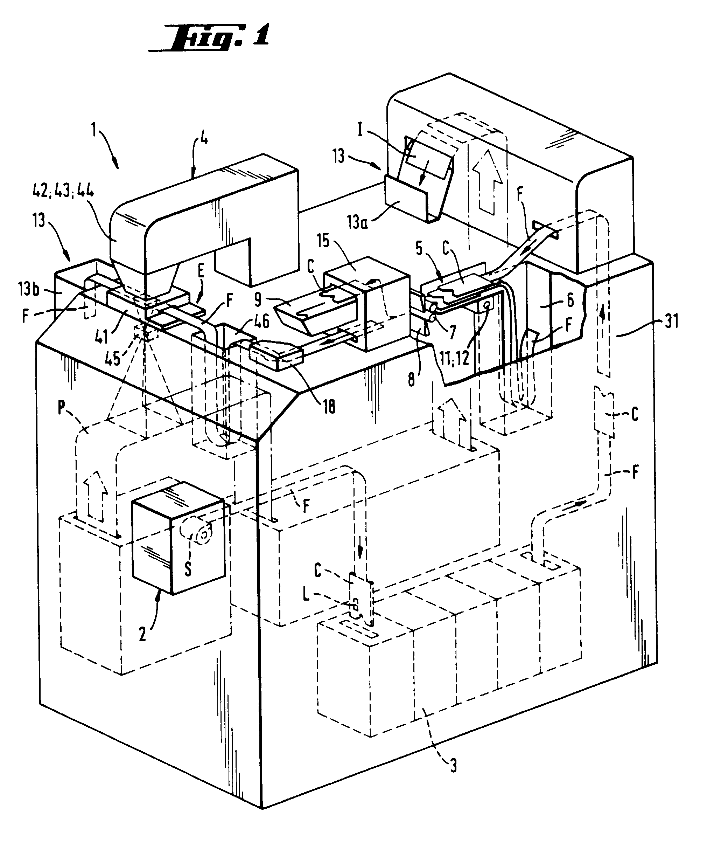

Bei der in Fig. 1 dargestellten und gesamthaft mit dem Bezugszeichen 1 versehenen, integrierten fotografischen Verarbeitungsanlage sind alle Bearbeitungsstationen für den Film F und für das Fotopapier P in einem einzigen Gehäuse untergebracht. Aus Gründen der Übersichtlichtkeit beschränkt sich die Darstellung in Fig. 1 wie auch in den nachfolgenden Figuren jeweils auf den für die Erfindung wesentlichen Filmpfad der integrierten fotografischen Verarbeitungsanlage 1. Die einzelnen Bearbeitungsstationen der fotografischen Verarbeitungsanlage 1 umfassen im wesentlichen eine Eingabestation 2 für noch nicht belichteten Rollenfilm, üblicherweise in Filmpatronen S aufgewickelten Kleinbildfilm des 135er Formats, einen verschiedene Chemikalientanks aufweisenden Filmprozessor 3, ein fotografisches Kopiergerät 4, einen in der Fig. 1 schematisch dargestellten Papierprozessor, der sich üblicherweise etwa parallel neben dem Filmprozessor 3 erstreckt, und je eine Ausgabestation 13für den entwickelten Film F und für die entwickelten Papierbilder P. Die belichteten Filme F in den Filmpatronen S werden in der Eingabestation 2 aus der Filmpatrone S entfernt und in ein Transportsystem eingefädelt, welches die noch nicht entwickelten belichteten Negativfilme F durch die Chemikalientanks des Filmprozessors 3 transportiert. Im Filmprozessor durchlaufen die Filme F verschiedene Entwickler-, Bleich-, Fixier- und Spülbäder und werden auf diese Art entwickelt und anschliessend in einem dem Filmprozessor 3 zugehörigen Trockner 31 getrocknet. Im Anschluss daran werden die entwickelten Filme F zum fotografischen Kopiergerät 4 bzw. Printer transportiert und dort auf lichtempfindliches Fotopapier P aufbelichtet. Das belichtete Fotopapier P wird durch einen Papierprozessor transportiert, in dem es verschiedene Entwickler-, Fixier- und Spülbader durchläuft, um die Bilder auf diese Weise zu entwickeln. Die fertig entwickelten Bilder I und die zugehörigen entwickelten Filme F werden schliesslich über entsprechende Ausgabestationen 13a für die Bilder bzw. 13b für den Film aus der integrierten fotografischen Verarbeitungsalage ausgegeben. Soweit entspricht die integrierte fotografische Verarbeitungsanlage 1 den aus dem Stand der Technik bekannten Geräten.

Im Unterschied zu den bekannten Geräten ist im Filmpfad zwischen dem Filmprozessor 3 und dem fotografischen Kopiergerät bzw. Printer 4 ein Zwischenspeicher 5,6 für die entwickelten Filme F angeordnet. Der Zwischenspeicher 5,6 entkoppelt das fotografische Kopiergerät 4 und den Filmprozessor 3. Die entwickelten Filme F werden ausgangs des des Filmprozessors 3 nicht sofort zur bildweisen Aufbelichtung auf das Fotopapier P zum fotografischen Kopiergerät weitertransportiert, sondern zunächst im Zwischenspeicher 5,6 abgelegt. Dabei werden die eintwickelten Filme F vollständig aus dem Transportsystem des Filmprozessors 3 ausgeschieden. Während ihrer Verweildauer im Zwischenspeicher 5,6 sind sie weder vom Transportsystem des Filmprozessors 3 noch von dem des fotografischen Kopiergeräts 4 erfasst.

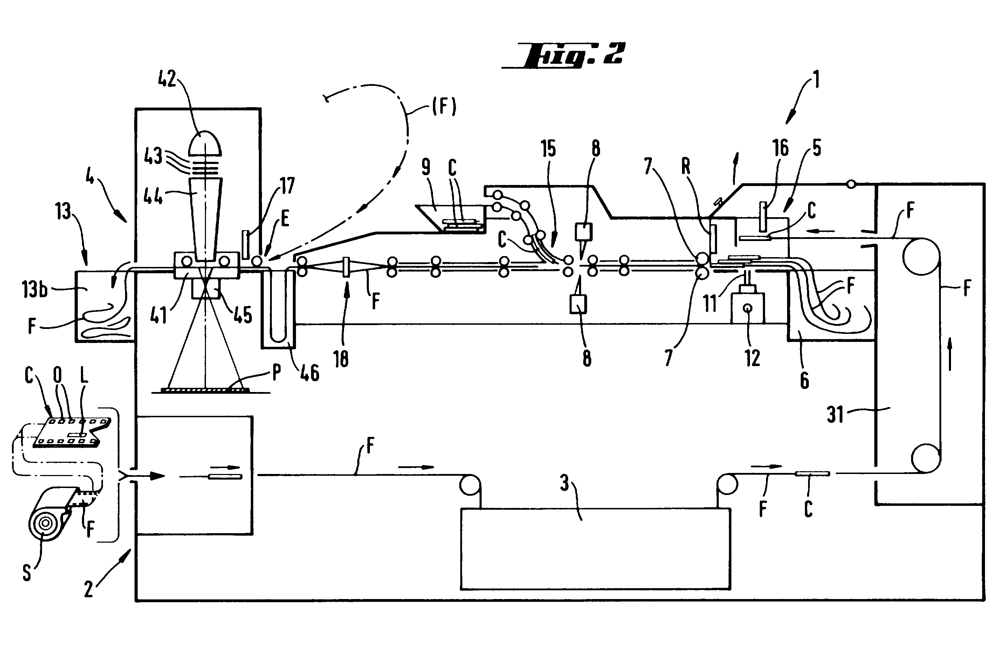

In Fig. 2 ist der Filmpfad der integrierten fotografischen Verarbeitungsanlage 1 detaillierter dargestellt. Der noch nicht entwickelte belichtete Negativfilm F wird in der Eingabestation 2 mit einer Transportkarte C verbunden. Dazu wird das vorlaufende Vorderende des Films F an das schmale Ende der Transportkarte C geklebt. Das Transportsystem des Filmprozessors erfasst die Transportkarte C und schiebt diese vorwärts. Auf diese Weise wird der Film F durch den Filmprozessor 3 transportiert. Ausgangs des Filmprozessors 3 wird die Transportkarte C in eine fachartige Ablage 5 abgelegt während der nunmehr entwickelte Film F in einen vertikalen Schacht 6 fällt.

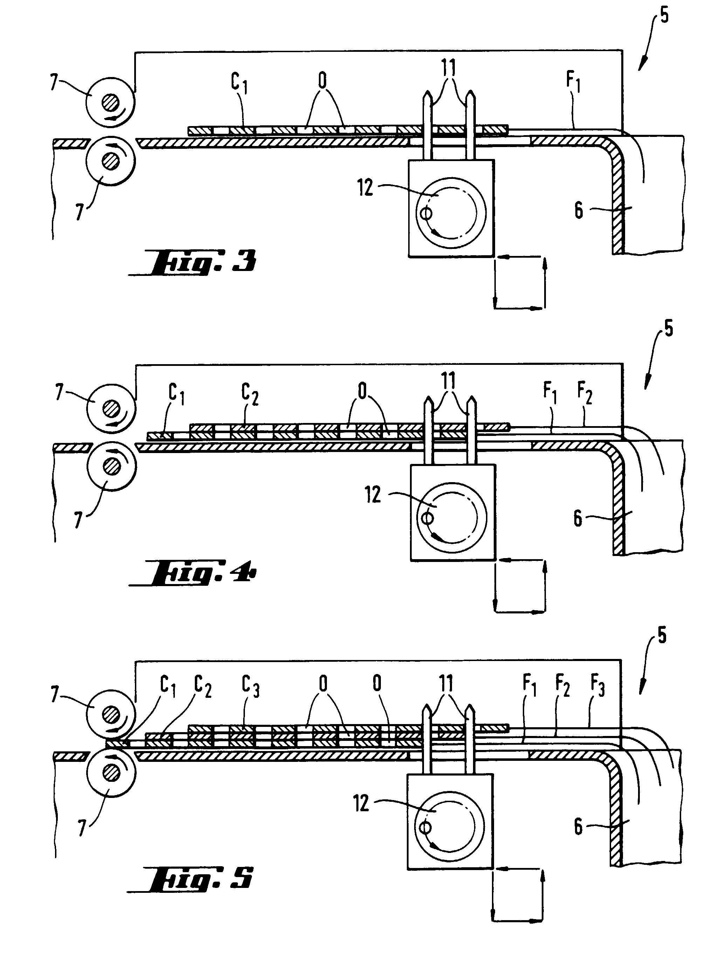

Der Zwischenspeicher 5,6 ist mit einem eigenen Transportsystem ausgastattet. Dieses umfasst Transportmittel für die Transportkarten C und eine Reihe von Transportwalzen für den Film. Die Transportmittel 11,12 in der Ablage sorgen zunäcjst dafür, dass die abgelegten Transportkarten C schrittweise in Richtung auf eine Filmbühne 41 des fotografischen Kopiergeräts 4 vorgeschoben wird. Auf diese Weise erscheint die nächste abgelegte Transportkarte C gegenüber der vorderen nach hinten dachziegelartig versetzt. Dieser Umstand ist in den Fig. 3-5 in drei verschiedenen Phasen genauer dargestellt. Dabei ist ersichtlich, dass die Transportkarten C₁-C₃ jeweils an ihren Längsrändern Öffnungen bzw. Perforationen O aufweisen. In Fig.3 ist eine erste Transportkarte C₁ in der fachartigen Ablage dargestellt. Der mit der ersten Transportkarte C₁ verbundene Film F₁ hängt in den Schacht hinunter. Die der Ablage zugeordneten Transportmittel umfassen Vorschubmittel 11,12, die mit den Perforationen O in Eingriff bringbar sind und auf diese Weise die Transportkarte C schrittweise vorschieben. Gemäss dem dargestellten Ausführungsbeispiel weisen die Vorschubmittel Eingriffinger 11 auf, die an einer unterhalb der Ablage 5 angeordneten Welle 12 derart exzentrisch befestigt sind, dass sie bei jeder Umdrehung der Welle 12 in Öffnungen O an den gegeüberliegenden Längsrändern der Transportkarte eingreifen und diese um eine Distanz weiterschieben, die dem Abstand zwischen zwei aufeinanderfolgenden Öffnungen eintspricht. Die Welle wird dabei von einem separaten Antriebsmotor 14 (Fig. 2) angetrieben. Die Ablage 5 für die Transportkarten ist nur geringfügig breiter als die Transportkarten, sie ist um einige Perforationsabstände länger als eine Transportkarte; maximal ist sie etwa doppelt so lang. Auf diese Weise können die Transportkarten sehr gut abgelegt werden und sind seitlich geführt. Die gewählte Länge der Ablage 5 erlaubt die Ablage einer relativ grossen Anzahl von Transportkarten.

In Fig. 4 ist die erste Transportkarte C₁ bereits um eine bestimmte Distanz vorgeschoben gezeichnet. Eine zweite Transportkarte C₂ mit einem daran befestigten zweiten Film F₂ ist darüber abgelegt. Dabei sind die Öffnungen O in den Längskanten der Transportkarten jeweils deckungsgleich. Die Vorschubmittel 11,12 sind in Eingriff mit den Öffnungen O dargestellt. Es ist ersichtlich, dass die Eingriffinger 11 in die Öffnungen beider Transportkarten C₁,C₂ stossen. Dadurch werden bei der Rotation der Welle 12 beide Transportkarten gemeinsam um einen Schritt weiterin Richtung eines Transportwalzenpaars 7 am Ausgang der Ablage 5 vorgeschoben, wobei aber der Schrittunterschied im Vorschub der beiden Transportkarten erhalten bleibt.

In Fig. 5 schliesslich ist eine dritte Transportkarte C₃ mit einem daran befestigten Film F₃ über die beiden vorhergehenden Transportkarten C₁,C₂ abgelegt. Es ist wiederum ersichtlich, dass die Öffnungen O an den Längskanten der Transportkarten jeweils deckungsgleich sind. Die Eingriffinger 11 greifen in Öffnungen der zwei obersten Transportkarten C₂,C₃ ein, während die unterste Transportkarte C₁ an ihrer hinteren Schmalseite geschoben wird. Auf diese Weise werden alle drei Transportkarten gemeinsam in Richtung auf das Transportwalzenpaar 7 vorgeschoben. Die unterste Transportkarte C₁ wird an das Transportwalzenpaar 7 gestossen. Nach erfolgter Rotation der Welle 12 wird der Antrieb des Transportwalzenpaars 7 gestartet. Dadurch wird die unterste Transportkarte C₁ weitertransportiert und der daran befestigte Film F₁ unter den beiden oberen Transportkarten C₂,C₃ hervorgezogen, während die Eingriffinger 11 noch in Eingriff mit den Öffnungen O der beiden übrigen Transportkarten C₂,C₃ sind.

Von dem Transportwalzenpaar 7 wird die Transportkarte C mit dem daran befestigten entwickelten Film F in Richtung der Filmbühne 41 des fotografischen Kopiergerätes 4 transportiert, wie in Fig. 2 dargestellt ist. Zwischen dem Transportwalzenpaar 7 und der Filmbühne 41 des fotografischen Kopiergerätes 4 ist eine Schneideeinrichtung 8 angeordnet, welche die Transportkarte C von dem entwickelten Film F abtrennt. Die abgetrennte Transportkarte C wird über eine Weiche 15 aus dem Filmpfad ausgeschieden und zu einem Auffangbehältnis 9 transportiert. Zweckmässigerweise ist das Auffangbehältnis 9 in der Nähe der Eingabestation 2 angeordnet, von wo sie das Bedienungspersonal zur Wiederverwendung entnehmen kann.

Nach dem Abtrennen der Transportkarte C werden die entwickelten Filme F zu der Filmbühne 41 des fotografischen Kopiergeräts 4 transportiert um dort bildweise auf das fotografische Papier P aufbelichtet zu werden. Eine dazu erforderliche Kopierlichtquelle 42, Farbfilter 43, ein Lichtschacht 44, in dem das Kopierlicht entsprechend aufbereitet wird, sowie eine unterhalb der Filmbühne 41 angeordnete Projektionsoptik 45 sind in Fig. 2 angedeutet. Das belichteten Fotopapier P wird im Papierprozessor (nicht dargestellt) entwickelt; die entwickelten Papierbilder und der entwickelte Film können schliesslich an der Ausgabestation 13 (Fig. 1) entnommen werden.

Zur Steuerung des Vorschubs der Transportkarten C bzw. der entwickelten Filme F sind in der Ablage 5, im Filmpfad zwischen der Ablage und der Filmbühne 41 und im fotografischen Kopiergerät 4 eine Reihe von vorzugsweise lichtelektrischen Sensoren vorgesehen. Einige der Sensoren sind in Fig. 2 angedeutet. Die Ablage 5 für die Transportkarten C ist insbesondere mit einem Detektor 16 ausgestattet, der feststellt, ob eine Transportkarte C in der Ablage 5 abgelegt ist. Ein weiterer Sensor 17 eingangs des fotografischen Kopiergeräts 4 erkennt die hintere Kante eines gerade abgearbeiteten Films F. Sind in der Ablage 5 eine oder mehrere Transportkarten C vorhanden und gibt der Sensor eingangs des Kopiergerätes ein Signal, dass das hintere Ende des Filmes F passiert hat, so wird der Antriebsmotor für die Vorschubmittel 11,12 in der Ablage 5 gestartet. Diese schieben die Transportkarte(n) C schrittweise vor, bis die unterste an das Transportwalzenpaar 7 stösst. Nach erfolgter Rotation der Welle 12 wird der Antrieb des Transportwalzenpaars 7 gestartet. Dadurch wird die unterste Transportkarte C weitertransportiert und der daran befestigte Film F unter den gegebenenfalls darüber liegenden weiteren Transportkarten hervorgezogen, während die Eingriffinger 11 noch in Eingriff mit den Perforationen O der übrigen Transportkarten sind. Die Transportkarte C wird schliesslich vom Film F getrennt und ausgeschieden, während der Film F zum Kopiergerät 4 weitertransportiert wird.

Aus der Darstellung in Fig. 1 ist ersichtlich, dass die Transportrichtung des Filmes F im Filmprozessor 3 und im fotografischen Kopiergerät 4 in einem Winkel von 90° zueinander stehen. Dies ergibt sich aus der möglichst platzsparenden Anordnung der Einzelkomponenten der integrierten Verarbeitungsanlage 1. Vorzugsweise wird bei der neunziggradigen Umlenkung des Filmes F dieser auch gleichzeitig gewendet, so dass die Schichtseite des Filmes F der Schichtseite des fotografischen Papiers zugewandt ist. Das Umlenken und das gleichzeitige Wenden des Filmes F erfolgt vorzugsweise in einer Filmwendeeinrichtung 18, die vor der Filmbühne 41 des Kopiergeräts 4 angeordnet ist.

Für den Fall, dass bereits entwickelte Filmstreifen vorliegen, beispielsweise aus einem Nachbestellauftrag oder weil bei einem Erstdurchlauf fehlerhafte Kopien erstellt worden sind, ist bei der erfindungsgemässen integrierten fotografischen Verarbeitungsanlage 1 eine Möglichkeit vorgesehen, diese manuell in die Filmbühne 41 einzulegen. Durch die entkoppelte Anordnung des Filmprozessors und des fotografischen Kopiergerätes kann das letztere an einer leicht zugänglichen Stelle des integrierten Gerätes angeordnet werden. Die Filmbühne ist leicht erreichbar, die bereits entwickelten Filmstreifen können ganz einfach von Hand in eine eingangs der Filmbühne 41 angeordnete Eingabevorrichtung E eingelegt werden. Dabei kann die korrekte Lage der Negative sehr einfach überprüft und gegebenenfalls korrigiert werden. Au diese Weise ist eine übersichtliche und einfache Bedienung bei der Verarbeitung von Nachbestellungen und bei Korrekturen möglich.

Die Entkopplung des Filmprozessors 3 und des fotografischen Kopiergerätes 4 durch Zwischenschalten eines Zwischenspeichers 5,6 erlaubt es, die genannten Bearbeitungsstationene unabhängig voneinander mit ihren optimalen Geschwindigkeiten zu betreiben. Muss beispielsweise die Durchlaufzeit im Filmprozessor verändert werden, beispielsweise weil andere Chemikalien verwendet werden, so hat dies praktisch keine Auswirkung auf die Arbeitsgeschwindigkeit des fotografischen Kopiergerätes. Auch kann die Vorschubgeschwindigkeit der Transporteinrichtung im Zwischenspeicher verändert werden, ohne dass dadurch die Durchlaufgeschwindigkeit des Filmprozessors bzw. die Arbeitsgeschwindigkeit des fotografischen Kopiergerätes mitgeändert werden müssen.

Der Einsatz von Transportkarten C für den Transport der Filme F durch den Filmprozessor 3 und durch den Zwischenspeicher 5,6 bietet eine Reihe von Vorteilen. Der Transport des Films F erfolgt dann nicht durch Eingriff von Walzen im Bereich der Filmperforationen, sondern es wird die Transportkarte C, die gleichfalls mit Perforationen O versehen ist, transportiert. Dies hat den grossen Vorteil, dass Filme mit einer Beschädigung im Bereich der Filmperforationen trotzdem problemlos transportiert werden können.

Vorzugsweise werden Transportkarten C benutzt, die zugleich als Informationsträger dienen. Die Informationen sind auf den Transportkarten als Lochungen L codiert. Die Ablage 5 kann mit einem Lochkarten-Lesegerät R ausgestattet sein, welches die auf den Transportkarten C codierte Information L entschlüsselt. Auf diese Weise kann dem Gerät beispielsweise mitgeteilt werden, dass ein bestimmter Film F nur entwickelt werden soll. Wenn die Transportkarte C dieses Films F in die Ablage 5 abgelegt wird, erkennt der Lochkarten-Leser R die entsprechende Information L und leitet diese an die Steuerungseinheit weiter. Die Vorschubmittel 11,12 in der Ablage 5 werden nicht in Betrieb gesetzt und es wird ein Signal für das Bedienungspersonal erzeugt, dass ein Film F in den Zwischenspeicher 5,6 abgelegt worden ist, der entnommen werden kann. Andere Transportkarten C können die Information enthalten, dass von jedem Negativ zwei Kopien erstellt werden sollen. In diesem Fall wird das Kopiergerät 4 entsprechend gesteuert. Als zusätzliche Hilfe für das Bedienungspersonal weisen die Transportkarten C mit den üblichen Standardinformationen L vorzugsweise jeweils eine unterschiedliche Farbe auf. Das Bedienungspersonal muss sich in diesem Fall nicht die codierte Information L auf der Transportkarte C entschlüsseln, sondern es kann die Karten C anhand der Farbe auswählen und zusammen mit dem in der Filmdose S enthaltenen Rollenfilm F in die Eingabestation 2 einbringen.

Durch die Entkopplung der Filmentwicklung und des Kopiervorganges kann einfach zwischen dem Einschrittprozess beim Erstdurchgang eines Filmes und dem Zweischrittverfahren bei Nachbestellungen und Korrekturen gewechselt werden. Dringende Nahcbestellungen können zu jedem beliebigen Zeitpunkt zwischen die Verarbeitung bereits in den Filmprozessor eingegebener Erstdurchgangsfilme eingeschoben werden. Das fotografische Kopiergerät ist auch räumlich von dem Filmprozessor getrennt, so dass Korrosionen vermieden werden können. Dadurch, dass die Filmbühne ist nicht mehr unmittelbar am Ausgang des Filmprozessors angeordnet ist, behindert sie die Zugängigkeit des Film-Chemieteils nicht mehr. Auf aufwendige Spiegelkonstruktionen zum Transport des Kopierlichtes zu dem fotografischen Papier kann verzichtet werden. Dadurch entfallen mögliche Justierprobleme oder Verzerrungen aufgrund der Spiegel. Das entwickelte Filmmaterial kann unmittelbar vor der Filmbühne gedreht werden, so dass die Filmschichtseite sich in der richtigen Lage befindet. Während die Erfindung im Zusammenhang mit Transportkarten beschrieben worden ist, die jeweils an die Vorderkante eines Filmes angeklebt werden, ist es für den Fachmann leicht ersichtlich, dass die Erfindung auch ohne derartige Transportkarten ausführbar ist. Die dafür erforderlichen konstruktiven Umbauten liegen in Kenntnis der Lehre der vorliegenden Anmeldung im Können des Fachmanns.

## Patentansprüche

1. Integrierte fotografische Verarbeitungsanlage umfassend innerhalb eines gemeinsamen Gehäuses eine Eingabestation (2) für noch nicht entwickelten, belichteten Rollenfilm, beispielsweise in Filmpatronen (S) aufgewickelten Kleinbildfilm, in der die eingegebenen Rollenfilme (F) abgespult, abgeschnitten und in ein Filmtransportsystem eines daran anschließenden Filmprozessors (3) eingespeist werden, in dem der belichtete fotografische Film (F) entwickelt wird, ein ausgangs des Filmprozessors (F) angeordnetes fotografisches Kopiergerät (4) zum bildweisen Aufbelichten von auf dem entwickelten Film (F) enthaltenen Negativen auf fotografisches Papier (P), einen Papierprozessor zum Entwickeln des belichteten fotografischen Papiers (P) und je eine Ausgabestation (13b, 13a) für den entwickelten Film (F) und die entwickelten Papierbilder (I), wobei zwischen dem Ausgang des Filmprozessors (3) und dem fotografischen Kopiergerät (4) ein Zwischenspeicher (5, 6) für entwickelte Einzelfilme (F) angeordnet ist, dadurch gekennzeichnet, daß der Zwischenspeicher mit einer automatischen Transporteinrichtung (11, 12; 7) ausgestattet ist, die unabhängig von den Transportsystemen des Filmprozessors (3) bzw. des Kopiergeräts (4) betreibbar ist und die der Übergabe der entwickelten Einzelfilme (F) an eine Filmbühne (41) des fotografischen Kopiergeräts (4) dient.

2. Vorrichtung nach Anspruch 1, dadurch gekennzeichnet, dass der Filmbühne (41) des fotografischen Kopiergeräts (4) eine Eingabevorrichtung (E) für Filmstreifen aus Nachbestellaufträgen vorgesehen ist.

3. Vorrichtung nach Anspruch 1 oder 2, dadurch gekennzeichnet, dass der Zwischenspeicher eine Ablage (5) für mit den vorlaufenden Vorderkanten der Filme (F) verbundene Transportkarten (C) umfasst, in welche die Transportkarten (C) dachziegelartig in Richtung des Filmprozessors (3) verschoben übereinander abgelegt werden, und einen vertikalen Schacht (6) zur Aufnahme der entwickelten Einzelfilme (F) aufweist.

4. Vorrichtung nach Anspruch 3, dadurch gekennzeichnet, dass die Ablage (5) geringfügig breiter ist als die Transportkarte (C) und dass ihre Länge im Maximum etwa der doppelten Länge einer Transportkarte (C) entspricht.

5. Vorrichtung nach Anspruch 3 oder 4, dadurch gekennzeichnet, dass ausgangs des Zwischenspeichers (5,6) vor der Filmbühne (41) des fotografischen Kopiergeräts (4) eine Schneideeinrichtung (8) zum Abtrennen der Transportkarte (C) von der vorlaufenden Vorderkante des entwickelten Films (F) und eine Ausscheideeinrichtung (15) für die abgetrennten Transportkarten (C) vorgesehen ist, die mit einem Auffangbehältnis (9) für die Transportkarten (C) verbunden ist.

6. Vorrichtung nach einem der vorangehenden Ansprüche dadurch gekennzeichnet, dass die Transporteinrichtung in der Ablage (5) Vorschubmittel (11,12) umfasst, welche in an den Längsrändern der Transportkarten (C) vorgesehene Perforationen (O) eingreifen und die gegebenenfalls dachziegelartig übereinandergeschichteten Transportkarten (C) zusammen mit den damit verbundenen Filmen (F) schrittweise vorschieben bis die unterste Transportkarte (C) des Stapels an ein ausgangs der Ablage (5) für die Transportkarten (C) angeordnetes Transportwalzenpaar (7) stösst, welches für den Weitertransport der Transportkarte (C) vorgesehen ist.

7. Vorrichtung nach Anspruch 6, dadurch gekennzeichnet, dass die Vorschubmittel Eingriffinger (11) umfassen, die an einer unterhalb der Ablage angeordneten rotierbaren Welle (12) derart exzentrisch befestigt sind, dass sie bei jeder Umdrehung der Welle (12) mit den Perforationen (O) an den Längskanten der gegebenenfalls dachziegelartig übereinandergeschichtet abgelegten Transportkarten (C) in Eingriff bringbar sind und die Transportkarten (C) um den Abstand zwischen zwei Perforationen (O) in Richtung des Transportwalzenpaars (7) vorschieben.

8. Vorrichtung nach einem der vorangehenden Ansprüche, dadurch gekennzeichnet, dass die Transportmittel des Filmprozessors (3), die Transporteinrichtung des Zwischenspeichers (5,6) und die Filmtransportmittel des fotografischen Kopiergerätes (4) unabhängig voneinander betreibbar und geschwindigkeitsregulierbar sind.

9. Vorrichtung nach einem der vorangehenden Ansprüche, dadurch gekennzeichnet, dass der Zwischenspeicher (5,6) samt der zugehörigen Transportmittel (11,12,7) für die Filme (F) bzw. für die Transportkarten (C) als kompaktes Bauteil gefertigt sind, welches wahlweise aus der integrierten Verarbeitungsanlage (1) entfernbar bzw. wieder einsetzbar ist.

10. Vorrichtung nach einem Ansprüche 3-9, dadurch gekennzeichnet, dass die Ablage (5) mit einer Leseeinrichtung (R) für auf den Transportkarten (C) codierte Informationen (L) ausgestattet ist.

11. Verfahren zum Betrieb einer integrierten fotografischen Verarbeitungsanlage, bei dem noch nicht entwickelte, belichtete Rollenfilme (F), beispielsweise in Filmpatronen (S) aufgewickelter Kleinbildfilme, über eine Eingabestation (2) in die Anlage (1) eingegeben werden, wo sie abgespult und abgeschnitten werden und in weiterer Folge durch einen Filmprozessor (3) transportiert werden, in dem jeder Film entwickelt und getrocknet wird, und von dort zu einem fotografischen Kopiergerät (4) gelangt, in dem die auf dem Film (F) angeordneten Negative bildweise auf fotografisches Papier (P) belichtet werden, bei dem das belichtete Fotopapier (P) durch einen Papierprozessor transportiert wird, in dem die autbelichteten Bilder entwickelt werden, und bei dem schließlich die entwickelten Einzelfilme (F) und die zugehörigen Papierbilder (I) an entsprechenden Ausgabestationen (13b bzw. 13a) aus dem Gerät (1) ausgestoßen werden, wobei die belichteten Einzelfilme (F) in einen Zwischenspeicher gelangen, dadurch gekennzeichnet, daß die belichteten Einzelfilme (F) zur Ablage in den Zwischenspeicher (5, 6) vollständig aus dem Transportsystem des Filmprozessors (3) ausgestoßen werden, von wo aus sie mit Hilfe einer dem Zwischenspeicher (5, 6) zugehörigen automatischen Transporteinrichtung (11, 12; 7), die unabhängig von den Transportsystemen des Filmprozessors (3) bzw. des Kopiergeräts (4) betreibbar ist, zu einer Filmbühne (41) des fotografischen Kopiergeräts (4) transportiert werden.

12. Verfahren nach Anspruch 11, dadurch gekennzeichnet, dass jeder Einzelfilm (F) vor dem Eintritt in den Filmprozessor (3) an seiner vorlaufenden Vorderkante mit einer Transportkarte (C) verbunden wird, die nach dem Austritt des Films (F) aus dem Filmprozessor (3) in einer fachartigen Ablage (5) des Zwischenspeichers abgelegt wird und dort von der Transporteinrichtung (11,12) derart in Richtung eines Transportwalzenpaars (7) vorgeschoben wird, dass eine nachfolgende Transportkarte (C) dachziegelartig in Richtung des Filmprozessor-Ausgangs verschoben abgelegt wird, während die mit den Transportkarten (C) verbundenen Einzelfilme (F) in einen vertikalen Schacht (6) fallen, aus dem sie beim Vorschub der Transportkarten (C) schrittweise heraufgezogen werden.

13. Verfahren nach Anspruch 12, dadurch gekennzeichnet, dass die Transportkarten (C) an ihren Längsrändern Perforationen (O) aufweisen, die einander gegenüber liegen, und dass der Vorschub der Transportkarten (C) mit exzentrisch angelenkten Eingriffingern (11) erfolgt, die an beiden Längsseiten der Transportkarten (C) in die Perforationen (O) der übereinander liegenden Transportkarten (C) eingreifen und diese schrittweise vorschieben, wobei die Vorschublänge etwa dem Abstand zweier aufeinanderfolgender Perforationen (O) entspricht.

14. Verfahren nach Anspruch 13, dadurch gekennzeichnet, dass immer jeweils die unterste Transportkarte (C) zuerst von dem Transportwalzenpaar (7) erfasst wird, welches die Transportkarte (C) zusammen mit dem damit verbundenen Film (7) zur Filmbühne (41) des fotografischen Kopiergerätes (4) vorschiebt.

15. Verfahren nach Anspruch 14, dadurch gekennzeichnet, dass die Transportkarte (C) vor der Filmbühne (41) von der Vorderkante des entwickelten Einzelfilms (F) abgetrennt wird und über eine Ausscheideeinrichtung (15) zu einem Auffangbehältnis (9) transportiert wird, während der Film (F) zur Filmbühne (41) weitertransportiert wird.

16. Verfahren nach einem der Ansprüche 11-15, dadurch gekennzeichnet, dass die Transportmittel des Filmprozessors (3), die Transporteinrichtung (11,12,7) des Zwischenspeichers (5,6) und die Filmtransportmittel des fotografischen Kopiergerätes (4) unabhängig voneinander betrieben werden und ihre Geschwindigkeit unabhängig voneinander reguliert wird.

17. Verfahren nach einem der Ansprüche 11-16, dadurch gekennzeichnet, dass der Film F auf dem Weg vom Zwischenspeicher (5,6) zur Filmbühne (41) des Kopiergerätes (4) um etwa 90° umgelenkt und dabei gleichzeitig derart gewendet wird, dass bei der Belichtung die Schichtseite des Filmes (F)der Beschichtung des fotografischen Papiers (P) zugewandt ist.

18. Verfahren nach einem der Ansprüche 11-17, dadurch gekennzeichnet, dass bereits belichtete Filmstreifen aus Nachbestellaufträgen über eine Eingabevorrichtung (E) manuell in die Filmbühne (41) eingelegt werden, und dass ihre korrekte Lage überprüft und erforderlichenfalls manuell korrigiert wird.

## Claims

1. Integrated photographic processing installation comprising, within a common casing, an input station (2) for as yet undeveloped but exposed roll film, for example small image film wound in film cartridges (S), in which input station the roll films (F) input are unwound, cut and fed into a film transport system of a following film processor (3) in which the exposed photographic film (F) is developed, a photographic copying unit (4) arranged at the outlet of the film processor (F) for the exposure onto photographic paper (P), image by image, of the negatives contained on the developed film (F), comprising a paper processor for developing the exposed photographic paper (P) and comprising one output station (13b, 13a) each for the developed film (F) and the developed paper images (I), an intermediate store (5, 6) for individual developed films (F) being arranged between the output of the film processor (3) and the photographic copying unit (4), characterised in that the intermediate store is equipped with an automatic transport device (11, 12; 7) which can be operated independently of the transport systems of the film processor (3) and the copying unit (4) and which is used to transfer the individual developed films (F) to a film platform (41) of the photographic copying unit (4).

2. Appliance according to Claim 1, characterised in that the film platform (41) of the photographic copying unit (4) is provided with an input appliance (E) for film strips from repeat orders.

3. Appliance according to Claim 1 or 2, characterised in that the intermediate store comprises a stacker (5) for the transport cards (C) connected to the leading front edge of the films (F), in which stacker (5) the transport cards (C) are deposited in the manner of roof tiles displaced one above the other in the direction of the film processor (3), and comprises a vertical shaft (6) for accepting the individual developed films (F).

4. Appliance according to Claim 3, characterised in that the stacker (5) is slightly wider than the transport card (C) and in that its maximum length corresponds approximately to twice the length of a transport card (C).

5. Appliance according to Claim 3 or 4, characterised in that at outlet from the intermediate store (5, 6) and before the film platform (41) of the photographic copying unit (4), provision is made for a cutting device (8) for separating the transport card (C) from the leading front edge of the developed film (F) and for a separating device (15) for the transport cards (C) which have been cut off, which separating device (15) is connected to a receptacle (9) for the transport cards (C).

6. Appliance according to one of the preceding claims, characterised in that the transport device in the stacker (5) comprises forward feed means (11, 12) which engage in perforations (O) provided on the longitudinal edges of the transport cards (C) and feed forward, in steps, the transport cards (C) possibly stacked one over the other in the manner of roof tiles, together with the films (F) connected to them until the lowest transport card (C) of the stack butts against a pair of transport rollers (7) arranged at outlet from the stacker (5) for the transport cards (C), which pair of transport rollers (7) is provided for the further transport of the transport cards (C).

7. Appliance according to Claim 6, characterised in that the forward feed means comprise engagement fingers (11) which are eccentrically fastened in such a way on a rotatable shaft (12), arranged below the stacker, that they can be brought into engagement with the perforations (O) on the longitudinal edges of the transport cards (C), possibly stacked one above the other in the manner of roof tiles, and feed the transport cards (C) forward in the direction of the pair of transport rollers (7) by the distance between two perforations (O) for each revolution of the shaft (12).

8. Appliance according to one of the preceding claims, characterised in that the transport means of the film processor (3), the transport device of the intermediate store (5, 6) and the film transport means of the photographic copying unit (4) can be driven independently of one another and can have their speeds regulated.

9. Appliance according to one of the preceding claims, characterised in that the intermediate store (5, 6), together with the associated transport means (11, 12, 7) for the films (F) or for the transport cards (C), are manufactured as a compact component which can be optionally removed from the integrated processing installation (1) and inserted again.

10. Appliance according to one of Claims 3 to 9, characterised in that the stacker (5) is equipped with a reading device (R) for coded information (L) on the transport cards (C).

11. Method of operating an integrated photographic processing installation in which as yet undeveloped but exposed roll films (F), for example small image films wound in film cartridges, are input via an input station (2) into the installation (1), where they are unwound and cut and, subsequently, transported through a film processor (3) in which each film is developed and dried, and from there pass to a photographic copying unit (4) in which the negatives arranged on the film (F) are exposed image by image onto photographic paper (P), in which the exposed photographic paper (P) is transported through a paper processor in which the exposed images are developed and in which, finally, the individual developed films (F) and the associated paper images (I) are expelled at corresponding output stations (13b and 13a) from the unit (1), the exposed individual films (F) passing into an intermediate store, characterised in that the exposed individual films (F) are expelled completely from the transport system of the film processor (3) for deposition in the intermediate store (5, 6), from which they are transported to a film platform (41) of the photographic copying unit (4) by means of an automatic transport device (11, 12; 7) which is associated with the intermediate store (5, 6) and can be operated independently of the film processor (3) and of the copying unit (4).

12. Method according to Claim 11, characterised in that each individual film (F) is connected, before entry into the film processor (3), at its leading front edge to a transport card (C) which, after emergence of the film (F) from the film processor (3), is deposited in a compartment-type stacker (5) of the intermediate store and is there fed forward by the transport device (11, 12) in the direction of a pair of transport rollers (7) in such a way that a following transport card (C) is deposited, in the manner of a roof tile, displaced in the direction of the film processor outlet, while the individual films (F) connected to the transport cards (C) fall into a vertical shaft (6) from which they are pulled up in steps by the forward feed of the transport cards (C).

13. Method according to Claim 12, characterised in that the transport cards (C) have perforations (O) on their longitudinal edges, which perforations are located opposite to one another, and in that the forward feed of the transport cards (C) takes place by means of eccentrically linked engagement fingers (11) which engage on both longitudinal sides of the transport cards (C) in the perforations (O) of the transport cards (C), which are located one above the other, and feed the transport cards (C) forward in steps, the forward feed length corresponding approximately to the distance between two consecutive perforations (O).

14. Method according to Claim 13, characterised in that it is always the respectively lowest transport card (C) which is gripped by the pair of transport rollers (7), which feeds the transport card (C), together with the associated film (7), forward to the film platform (41) of the photographic copying unit (4).

15. Method according to Claim 14, characterised in that the transport card (C) is separated from the front edge of the individual developed film (F) before the film platform (41) and is transported to a receptacle (9) by means of a separating device (15) while the film (F) is transported onto the film platform (41).

16. Method according to one of Claims 11 to 15, characterised in that the transport means of the film processor (3), the transport device (11, 12, 7) of the intermediate store (5, 6) and the film transport means of the photographic copying unit (4) are driven independently of one another and their speeds are regulated independently of one another.

17. Method according to one of Claims 11 to 16, characterised in that the film F is deflected by approximately 90° on the way from the intermediate store (5, 6) to the film platform (41) of the copying unit (4) and is, in the process, turned at the same time in such a way that during the exposure, the coating side of the film (F) faces towards the coating of the photographic paper (P).

18. Method according to one of Claims 11 to 17, characterised in that already exposed film strips from the repeat orders are inserted manually into the film platform (41) by means of an input appliance (E) and that their correct position is checked and, if necessary, corrected manually.

## Revendications

1. Système de traitement photographique intégré comportant, à l'intérieur d'une carrosserie commune, une station d'entrée (2) pour un film en rouleau exposé, non encore développé, par exemple un film en petit format bobiné en bobines de film (S), système dans lequel les films en rouleaux entrés (F) sont débobinés, coupés à longueur et introduits dans un système de transport de film d'un module (3) de traitement du film (3) qui vient à la suite et dans lequel le film photographique que exposé (F) est développé, une tireuse photographique (4), disposée à la suite du module (F) de traitement du film, pour exposer, image par image, les négatifs contenus dans le film (F), développé, à un rayonnement tombant sur du papier photographique (P), un module de traitement du papier pour développer le papier photographique (P), exposé, et, respectivement, une station de sortie (13b, 13a) pour le film (F), développé, et pour les tirages sur papier (i), développés, système dans lequel, entre la sortie du module (3) de traitement du film et la tireuse photographique (4) est disposé un magasin intermédiaire (5, 6) pour les différents films (F) développés, caractérisé par le fait que le magasin intermédiaire est équipé d'un dispositif de transport automatique (11, 12; 7) qui peut fonctionner indépendamment des systèmes de transport du module (3) de traitement du film ou de la tireuse (4) et qui sert à transmettre les différents films (F), développés, à une platine (41) de la tireuse photographique (4).

2. Système selon la revendication 1, caractérisé par le fait que pour la platine (41) de la tireuse photographique (4) est prévu un dispositif d'entrée (E) pour des bandes de film de commandes de retirage.

3. Système selon la revendication 1 ou 2, caractérisé par le fait que, pour des cartes de transport (C) reliées aux bord avant des films (F), le magasin intermédiaire comporte un dépôt (5) dans lequel les cartes de transport (C) se déposent l'une au-dessus de l'autre, décalées, à la façon de tuiles, en direction du module (3) de traitement du film et présente un puits vertical (6) pour recevoir les différents films (F) développés.

4. Système selon la revendication 3, caractérisé par le fait que le dépôt (5) est légèrement plus large que la carte de transport (C) et que sa longueur vaut au maximum environ le double de la longueur d'une carte de transport (C).

5. Système selon la revendication 3 ou 4, caractérisé par le fait qu'à la suite du magasin intermédiaire, (5, 6), avant la platine (41) de la tireuse photographique (4), sont prévus un dispositif de coupe (8) pour détacher la carte de transport (C) d'avec le bord avant du film (F) développé et, pour les cartes de transport (C), détachées un dispositif de séparation (15) qui est relié à un récipient de collecte (9) pour les cartes de transport (C).

6. Système selon l'une des revendications précédentes, caractérisé par le fait que le dispositif de transport comporte dans le dépôt (5) des moyens d'avance (11, 12) qui viennent en prise dans des perforations (O) prévues sur les bords longitudinaux des cartes de transport (C) et font avancer pas à pas les cartes de transport (C), éventuellement empilées l'une au-dessus de l'autre à la façon de tuiles, avec les films (F) qui leurs sont liés, jusqu'à ce que la carte de transport (C) la plus inférieure de la pile bute sur une paire de rouleaux de transport (7) qui est disposée à la suite du dépôt (5) pour les cartes de transport (C) et qui est prévue pour la poursuite du transport de la carte de transport (C).

7. Système selon la revendication 6, caractérisé par le fait que les moyens d'avance comportent des doigts de prise (11) qui sont fixés excentriquement à l'abre rotatif (12), disposé en dessous du dépôt, de façon à venir à chaque tour de l'arbre (12), en prise avec les perforations (O) prévues sur les bords longitudinaux des cartes de transport (C) éventuellement déposées empilées l'une au-dessus de l'autre à la façon de tuiles et à faire avancer les cartes de transport (C), en direction de la paire de rouleaux de transport (7), de la valeur de la distance existant entre deux perforations (O).

8. Système selon l'une des revendications précédentes, caractérisé par le fait que le moyen de transport du module (3) de traitement du film, le dispositif de transport du magasin intermédiaire (5, 6) et le moyen de transport du film de la tireuse photographique (4) peuvent fonctionner, avec régulation de la vitesse, indépendamment l'un de l'autre.

9. Système selon l'une des revendications précédentes, caractérisé par le fait que le magasin intermédiaire (5, 6) y compris le moyen de transport associé (11, 12, 7) pour les films (F) ou pour les cartes de transport (C) sont fabriqués sous forme d'un module compact que l'on peut au choix sortir hors du système de traitement intégré (1) ou l'y remettre.

10. Système selon l'une des revendications 3-9, caractérisé par le fait que le dépôt (5) est équipé d'un dispositif de lecture (R) pour des informations codées (L) sur les cartes de transport (C).

11. Procédé de fonctionnement d'un système de traitement photographique intégré, dans le cas duquel, par l'intermédiaire d'une station d'entrée (2), on entre des films en rouleau (F), exposés, non encore développés, par exemple des films en petit format bobinés en bobines de film (S), dans le système (1) où ils sont débobinés et coupés à longueur et, à la suite, sont transportés à travers un module (3) de traitement du film dans lequel chaque film est développé et séché, et, de là, parvient dans une tireuse photographique (4) dans laquelle les négatifs, disposés sur le film (F), sont exposés, image par image, à un rayonnement tombant sur du papier photographique (P), dans le cas duquel le papier photographique (P), exposé, est transporté à travers un module de traitement du papier dans lequel les images exposées sont développées, et dans le cas duquel enfin les différents films (F), développés, et les tirages sur papier associés (1) sont expulsés hors du système (1) aux stations de sortie appropriées (13b ou 13a), procédé dans lequel les différents films exposés (F) parviennent dans un magasin intermédiaire, caractérisé par le fait que les différents films exposés (F) sont complètement expulsés hors du système de transport du module (3) de traitement du film pour venir en dépôt dans le magasin intermédiaire (5, 6) d'où, à l'aide d'un dispositif de transport automatique (11, 12; 7) qui est associé au magasin intermédiaire (5, 6) et peut fonctionner indépendamment des systèmes de transport du module (3) de traitement du film ou de la tireuse (4), ils sont transportés à une platine (41) de la tireuse photographique (4).

12. Procédé selon la revendication 11, caractérisé par le fait qu'avant d'entrer dans le module (3) de traitement du film, chaque film (F) est relié, à son bord avant, à une carte de transport (C) qui, après la sortie du film (F) hors du module (3) du traitement du film, est déposée dans un dépôt en forme de caster (5) du magasin intermédiaire et, sous l'action du dispositif de transport (11, 12), y avance en direction de la paire de rouleaux de transport (7) de façon qu'une carte de transport (C) qui vient à la suite soit déposée décalée à la façon de tuiles en direction de la sortie du module de traitement du film, tandis que les différents films (F), liés aux cartes de transport (C), tombent dans un puits vertical (6) d'où ils sont sortis pas à pas lors de l'avance des cartes de transport (C).

13. Procédé selon la revendication 12, caractérisé par le fait que sur leurs bords longitudinaux, les cartes de transport (C) présentent des perforations (O) qui se situent en face les unes des autres et que l'avance des cartes de transport (C) se fait avec des doigts de prise (11) articulés excentriquement qui, sur les deux côtés longitudinaux des cartes de transport (C), viennent en prise dans les perforations (O) des cartes de transport (C) situées au-dessus de l'autre et les font avancer pas à pas, la valeur de l'avance correspondant à peu près à la distance entre deux perforations (O) successives.

14. Procédé selon la revendication 13, caractérisé par le fait que c'est toujours la carte de transport (C) la plus inférieure qui est d'abord saisie par la paire de rouleaux (7) qui fait avancer la carte de transport (C), ainsi que le film (7) qui lui est lié, vers la platine (41) de la tireuse photographique (4).

15. Procédé selon la revendication 14, caractérisé par le fait qu'avant la platine (41), la carte de transport (C) est détachée du bord avant du film (F), développé et, au moyen du dispositif de séparation (15), transportée à un récipient de collecte (9), tandis que le film (F) poursuit son transport vers la platine (41.

16. Procédé selon l'une des revendications 11-15, caractérisé par le fait que le moyen de transport du module (3) de traitement du film, le dispositif de transport (11, 12, 7) du magasin intermédiaire (5, 6) et le moyen de transport du film de la tireuse photographique (4) fonctionnent indépendamment l'un de l'autre et que leur vitesse est régulée indépendamment l'un de l'autre.

17. Procédé selon l'une des revendication 11-16, caractérisé par le fait que sur le chemin allant du magasin intermédiaire (5, 6) à la platine (41) de la tireuse (4), le film (F) est dévié d'environ 90° et qu'il y est en même temps retourné de façon que, lors de l'exposition, ce soit la face photosensible du film (F) qui soit orientée vers la couche photosensible du papier photographique (F).

18. Procédé selon l'une des revendication 11-17, caractérisé par le fait que l'on introduit manuellement sur la platine (41), au moyen d'un dispositif d'introduction (E), des bandes de film déjà exposées pour des commandes de retirage et que l'on vérifie leur position correcte et qu'on la corrige éventuellement manuellement.
